# EUROPÄISCHE PATENTSCHRIFT

(11) **EP 2 723 670 B1**
(45) Veröffentlichungstag und Bekanntmachung des Hinweises auf die Patenterteilung: **12.08.2015**
(21) Anmeldenummer: 12730380.8
(22) Anmeldetag: 08.06.2012
(51) Int. Cl.: F03D 1/06, B66C 1/10, B66C 23/18, F03D 1/00

(54) **LASTHANDHABUNGSVORRICHTUNG ZUM ANHEBEN UND VERFAHREN ZUR MONTAGE VON ROTORBLÄTTERN EINER WINDENERGIEANLAGE**
LOAD HANDLING APPARATUS FOR LIFTING, AND METHOD FOR MOUNTING, ROTOR BLADES OF A WIND TURBINE
DISPOSITIF DE MANUTENTION DE CHARGES POUR LE LEVAGE ET PROCÉDÉ DE MONTAGE DE PALES DE ROTOR D'UN AÉROGÉNÉRATEUR

(30) Priorität: 21.06.2011 DE 102011116189
(43) Veröffentlichungstag der Anmeldung: 30.04.2014
(73) Patentinhaber: Senvion SE, 22297 Hamburg (DE)
(72) Erfinder: EDELMANN, Ulf, 24598 Boostedt (DE); LEHMANN, Sven, 24787 Fockbek (DE)
(74) Vertreter: Hausfeld, Norbert
(86) Internationale Anmeldenummer: PCT/EP2012/002437
(87) Internationale Veröffentlichungsnummer: WO 2012/175171

(56) Entgegenhaltungen:
- EP-A1- 1 925 582

## Beschreibung

Die Erfindung betrifft eine Lasthandhabungsvorrichtung zum Anheben von Rotorblättern in eine Montageposition nach Anspruch 1 sowie ein Verfahren zur Montage von Rotorblättern an der Rotornabe einer Windenergieanlage nach Anspruch 17.

Mit zunehmender Größe der Windenergieanlagen steigen auch die Anforderungen und Probleme bei der Montage dieser Windenergieanlagen. Dies gilt nicht zuletzt für die Montage der Rotorblätter an der Rotornabe, während diese bereits auf dem Turm der Windenergieanlage angeordnet ist. Bei Nabenhöhen von inzwischen jenseits von 100 Metern und bei Rotorblattlängen von mehr als 25 Metern müssen nicht nur erhebliche Lasten und erhebliche Höhen bewältigt werden, sondern mit wachsender Nabenhöhe stellt auch zunehmend der Wind ein Problem bei der Montage der Rotorblätter dar. Denn die Rotorblätter weisen eine große Angriffsfläche für den Wind auf. Diesen widrigen Umständen steht gegenüber, dass für die Montage der Rotorblätter an die Blattflansche der Rotornabe ein relativ hohes Maß an Genauigkeit erforderlich ist, damit die Ankopplung des Rotorblattes an den Rotorblattflansch erfolgen kann. Hierzu muss das Rotorblatt zumindest während des letzten Montageschrittes möglichst ruhig stehen.

Es ist aus dem Stand der Technik bekannt, dass vom Boden aus Halteseile zum Rotorblatt verlaufen. Über diese Halteseile versuchen dann Bedienpersonen das Rotorblatt auszurichten und ruhig zu halten. Dieses Vorgehen ist personalintensiv und es besteht ein enormer Platzbedarf, da die Halteseile möglichst schräg verlaufen müssen. War dieses Vorgehen schon bei kleineren Windenergieanlagen mühsam, so erscheint es bei größeren Windenergieanlagen und bei nennenswerten Windstärken gänzlich unmöglich, dass ein Rotorblatt durch schiere Muskelkraft ausreichend ruhig gehalten werden kann. Bei der Errichtung von Offshore-Anlagen ist überdies der erforderliche Platz in der Regel nicht vorhanden.

Die EP 1 925 582 A1 offenbart eine Lasthandhabungsvorrichtung gemäß dem Oberbegriff des Anspruchs 1.

Aus der EP 1 925 582 A1 ist bekannt, die Führung und Ausrichtung der an der Rotornabe zu montierenden Rotorblätter über Führungsseile vorzunehmen, die von einem das Rotorblatt haltenden Lastaufnahmemittel, das am Kranhäken eines Kranes hängt, in Richtung zum Kranausleger verlaufen. Diese Führungsseile werden am Kranausleger umgelenkt und verlaufen bis zum Fuß des Kranes, wo sie an einer Seilwinde befestigt sind. Mittels dieser Seilwinde können die Führungsseile verkürzt oder verlängert werden. Gegenüber dem im vorhergehenden Absatz genannten Stand der Technik wird im Wesentlichen die Muskelkraft der Bedienpersonen durch die Kraft der Seilwinde ersetzt. Es wird aber nach wie vor als nachteilig angesehen, dass diese Führung des Rotorblattes noch immer sehr anfällig gegen Windeinfall ist.

Aus der DE 20 2006 015 189 U1 ist eine Lasthandhabungsvorrichtung in Form eines Teleskopkranes mit einer diesen stabilisierenden Abspannverseilung bekannt. Ein am Lasthaken dieses Kranes angehängter Rahmen nimmt das zu montierende Rotorblatt auf. Der Rahmen ist über eine zusätzliche Abspannverseilung mit dem Teleskopkranausleger verbunden. Diese Lösung ähnelt der Lösung der EP 1 925 582 A1 und weist auch die gleichen Nachteile auf, nämlich die weiterhin gegebene Empfindlichkeit gegen Windeinfall.

Einen gänzlich anderen Weg schlägt die gattungsfremde EP 2 243 954 A2 ein. Es wird hier der Kranhaken durch eine aufwendige Manipulator-Konstruktion ersetzt. Dieser Manipulator ist fest mit dem Ende des Kranauslegers verbunden und nimmt das zu montierende Rotorblatt auf. Das oben geschilderte Problem mit Windeinflüssen, wie es bei Kränen mit Kranhaken und Kranseilen existiert, besteht hier demgemäß nicht. Es wird als Nachteil angesehen, dass die Lehre der EP 2 243 954 A2 eine massive Umkonstruktion vorhandener Krane erforderlich macht, und dass diese Konstruktion auch nur für teleskopierbare Krane anwendbar ist. Insgesamt wirkt die Konstruktion des Manipulators auch sehr aufwendig und kostspielig.

Die Montage der Rotorblätter erfolgt bevorzugt in horizontaler Ausrichtung an der Nabe, also in der 3-Uhr- oder in der 9-Uhr-Stellung. Es sind allerdings auch Verfahren bekannt, bei denen die Montage zum Beispiel in der 6-Uhr- oder in der 12-Uhr-Stellung des Rotorblattes erfolgt. Die WO 2004/070203 A2 offenbart zum Beispiel ein Montageverfahren, bei dem jedes der Rotorblätter in der 3-Uhr-Position an der Rotornabe angebracht wird. Dazu wird die Rotornabe zwischen den einzelnen Montageschritten jeweils um ihre horizontale Drehachse gedreht, bis die Blattflansche in der gewünschten Position stehen, teilweise wird auch die Gondel um eine vertikale Achse um 180 Grad gedreht. Ein Montageverfahren zur Montage eines Rotorblattes in der 6-Uhr-Stellung offenbart zum Beispiel die EP 1 507 975 B1. Die Probleme hinsichtlich Windeinwirkung bestehen unabhängig davon, ob eine Montage in horizontaler oder vertikaler Stellung des Rotorblattes erfolgt. Das Problem ist im Grunde nur um 90 Grad gedreht.

Es ist eine Aufgabe der vorliegenden Erfindung, eine Lasthandhabungsvorrichtung zum Anheben von Rotorblättern in eine Montagposition zur Verfügung zu stellen, die die genannten Probleme der störenden Windeinwirkung verringert. Weiterhin ist eine Aufgabe der vorliegenden Erfindung, ein Montageverfahren vorzuschlagen, das auch bei höheren Windstärken als bisher sicher ausführbar ist.

Diese Aufgabe wird von einer Lasthandhabungsvorrichtung mit den Merkmalen des Anspruches 1 sowie von einem Montageverfahren mit den Merkmalen des Anspruches 17 gelöst.

Erfindungsgemäß weist die Lasthandhabungsvorrichtung eine Abstützeinrichtung am Kranausleger auf. Diese Abstützeinrichtung definiert eine Abstützfläche, die in die vertikale Bewegungsebene des Rotorblattes hineinragt. Deshalb kommt beim Anheben des Rotorblattes das Rotorblatt oder die Befestigungsmittel, an denen das Rotorblatt befestigt ist, zur Anlage gegen diese Abstützfläche. Weiterhin ist die Abstützeinrichtung starr ausgebildet. Sie soll sich bei Druck- und Zugbelastung nicht in der Länge ändern. Dies schließt aber z.B. nicht aus, dass auf der Abstützfläche z.B. elastische Polster angebracht sind, um Blattbeschädigung zu vermeiden oder die Anlage der beteiligten Bauteile zu verbessern. Die Form der Abstützfläche ist bevorzugt derart gewählt, dass das Rotorblatt gegen Drehung um eine vertikale Achse gesichert ist. Ist das Rotorblatt erst einmal zur Anlage gegen diese Abstützfläche gelangt, ist es gegen den störenden Einfluss von Wind gesichert. Zu diesem Zweck kann die Oberfläche der Abstützeinrichtung zum Beispiel komplementär zur Blattform geformt sein. Die Abstützeinrichtung kann aber zum Beispiel in einfachster Ausgestaltung auch eine Schrägfläche sein, gegen die das Rotorblatt oder die Befestigungsmittel beim Anheben anlaufen. Weitere vorteilhafte Ausgestaltungen sind Gegenstand der Unteransprüche.

Das erfindungsgemäße Montageverfahren zeichnet sich gegenüber dem Stand der Technik zunächst durch die Nutzung einer erfindungsgemäßen Lasthandhabungsvorrichtung aus, an die das Rotorblatt mit Befestigungsmitteln befestigt wird. Weiterhin zeichnet sich das Verfahren dadurch aus, dass das Rotorblatt angehoben wird, bis es selber oder bis das Befestigungsmittel gegen die Abstützeinrichtung zur Anlage kommt. Erst danach wird das Rotorblatt weiter bis in die Montageposition angehoben, dort zur Nabe ausgerichtet und an dieser befestigt. Weitere vorteilhafte Ausgestaltungen des Montageverfahrens sind Gegenstand der Unteransprüche 18 und 19.

Durch die Erfindung wird die Handhabung von Rotorblättern bei der Errichtung von Windenergieanlagen erleichtert. Es kann auch bei ungünstigeren Windbedingungen der Aufbau erfolgen, so dass weniger Unterbrechungen und Verzögerungen zu erwarten sind. Auch in Gebieten mit starken Winden kann der Aufbau unproblematischer erfolgen. Die Rotorblätter müssen nicht mehr vom Boden aus mit Halteseilen geführt oder für die Montage ausgerichtet werden. Der Platzbedarf auf der Baustelle wird verringert. Es wird insgesamt auch die Sicherheit beim Aufbau verbessert, da kein Personal mehr an den Halteseiten erforderlich ist. Ein standardisierter Montageprozess kann eingeführt werden.

Nach Anspruch 2 ist bevorzugt, dass die Befestigungsmittel ein Lastaufnahmemittel mit einem Tragrahmen umfassen. An dem Tragerahmen ist einerseits das Rotorblatt zu befestigen sowie andererseits auch der Kranhaken des Kranes. Es ist vorteilhaft, wenn beim Anheben des Rotorblattes ein Bereich des Tragerahmens gegen die Abstützfläche zur Anlage kommt, weil dadurch eine mögliche Beschädigung des Rotorblattes vermieden werden kann. Die Anlage des Rotorblattes selbst gegen die Abstützfläche hätte den Nachteil einer höheren Beschädigungsgefahr, insbesondere bei relativ starken und wechselnden Winden. Weiterhin müsste die Abstützfläche möglichst dem zu montierenden Blatttyp formangepasst sein, um eine möglichst großfläche Abstützung zu erreichen. Deshalb wäre die Abstützeinrichtung in der Regel nur für einen Blatttyp einsetzbar.

Nach Anspruch 3 ist bevorzugt, dass der Tragerahmen ein Drehmomentstützmittel aufweist. In der Abstützeinrichtung ist eine Öffnung ausgebildet, die mit Vorteil im Wesentlichen komplementär zum Drehmomentstützmittel ausgeformt ist. Beim Anheben des Rotorblattes soll das Drehmomentstützmittel in die Aufnahmeöffnung eingreifen und so von der Abstützeinrichtung gegen Drehung um eine vertikale Achse gesichert gehalten werden. Das Eingreifen soll vor oder bei Erreichen der Montageposition erfolgen. Auch die umgekehrte Anordnung ist möglich, also Ausbildung des Drehmomentstützmittels an der Abstützeinrichtung und Vorsehen der Öffnung im Tragerahmen.

Es wird im Folgenden als vorteilhaft angesehen, die erste der genannten Alternativen zu wählen, weil dann die am Kranausleger vorzunehmenden Modifikationen gering sind.

Die Aufnahmeöffnung kann zum Beispiel nach unten offen sein, weil dann beim Anhebvorgang das Drehmomentstützmittel leicht von unten einfuhrbar ist. Sie kann aber auch nach oben offen sein, wobei in diesem Fall dann das Rotorblatt zunächst über die Abstützeinrichtung hinweg angehoben und danach von oben wieder abgelassen werden müsste. Es ist daher bevorzugt, dass die Aufnahmeöffnung nach unten offen ist.

Die Abstützeinrichtung und das Drehmomentstützmittel können zum Beispiel in der Art einer Kulissenführung ausgebildet sein. So kann die am Kranausleger angeordnete Abstützeinrichtung zum Beispiel die Kulisse bilden und das Drehmomentstützmittel den Kulissenstein. Es kann aber auch umgekehrt vorgesehen sein, dass der Kulissenstein am Kranausleger und die Kulisse am Tragerahmen angeordnet ist.

Weiterhin bevorzugt kann die Aufnahmeöffnung mit einer Einlaufschräge ausgebildet sein oder es sind trichterförmig Einlaufbleche am Eingang der Aufnahmeöffnung vorgesehen, um das Einführen des Drehmomentstützmittels in die Aufnahmeöffnung zu erleichtern.

Mit Vorteil sind die Merkmale des Anspruches 4 vorgesehen. Die Aufnahmeöffnung kann zum Beispiel als Langloch ausgebildet sein, so dass bei Eingriff des Drehmomentstützmittels in die Aufnahmeöffnung eine Hebebewegung in vertikaler Richtung entlang des Langlochs weiterhin möglich ist. Bei der exakten Ausrichtung des Rotorblattes zur Rotornabe kann dieses Höhenspiel ausgenutzt werden, indem das Rotorblatt weiter angehoben oder abgesenkt werden kann, während sich das Drehmomentstützmittel im Langloch geführt auf und ab bewegt, so dass die Sicherung des Rotorblattes gegen windinduziertes Verdrehen weiterhin gewährleistet ist.

Bevorzugt sind die Merkmale des Anspruches 5 vorgesehen. Über das Drehlager ist es möglich, dass der Tragerahmen gegenüber dem Kranhaken verdreht wird. Auch dies erweist sich insbesondere bei der exakten Ausrichtung des Rotorblattes zur Rotornabe als vorteilhaft. Bevorzugt ist dieses Drehlager arretierbar, um unerwünschtes Drehen z.B. bei Erreichen der gewünschten Position und Ausrichtung zu unterbinden. Weiter bevorzugt ist das Drehlager mit einem Drehantrieb ausgestattet, und dieser Drehantrieb z.B. fernsteuerbar ausgebildet.

Die Abstützeinrichtung kann auf vielfältige Art ausgebildet sein. Erfindungsgemäß ist zunächst nur vorausgesetzt, dass das Rotorblatt oder das Befestigungsmittel derart mit ihr zur Anlage kommen, dass das Rotorblatt um eine vertikale Achse drehgesichert ist. Mit Vorteil werden die Merkmale des Anspruches 7 vorgeschlagen. Jeder Kranausleger, an dem ein Abstützträger befestigbar ist, nach Anspruch 8 bevorzugt zwei Träger seitlich am Kranausleger, kann dann leicht zu einer erfindungsgemäßen Lasthandhabungsvorrichtung umgebaut werden.

Bevorzugt sind die Merkmale des Anspruches 9 vorgesehen. Eine Verstellbarkeit in der Neigung kann einerseits beim Einführen der Drehmomentstützmittel in die Abstützeinrichtung hilfreich sein. Andererseits kann die Neigbarkeit bei der exakten Positionierung des Rotorblattes zur Rotornabe eingesetzt werden. Bevorzugt erfolgt diese Verstellung mittels eines Verstellantriebes und weiter bevorzugt ferngesteuert.

Die Abstützträger könnten mit fester Länge vorgesehen sein. Bevorzugt sind aber Abstützträger mit den Merkmalen des Anspruches 10. Solche Abstützträger könnten zum Beispiel eine Reihe von hintereinanderliegenden Stecklöchern aufweisen, so dass die Abstützträger in der Länge abgestuft durch Steckbölzen am Kranausleger montierbar wären. Die Abstützträger können auch stufenlos in der Länge verstellbar sein, z.B. durch Integration eines Hydraulikzylinders bzw indem ein Hydraulikzylinder den Abstützträger ausbildet.

In Alternative zu den vorgenannten Abstützträgern ist gemäß Anspruch 11 die Abstützeinrichtung bevorzugt als Hängestütze ausgeführt. Die Hängestütze ist anders als die Abstützträger nicht seitlich am Kranausleger befestigt, sondern hängt kranhakenseitig nach unten vom Kranausleger herab. In dem nach unten hängenden freien Ende der Hängestütze ist die Aufnahmeöffnung ausgebildet.

Mit Vorteil sind die Merkmale des Anspruches 12 vorgesehen. Es ist dadurch möglich, dass die Hängestütze beim Ablassen oder Aufrichten des Kranauslegers der Gravitation folgend seine vertikale Ausrichtung beibehalten kann. Die Pendelachse kann dabei bevorzugt arretiert werden, um z.B. bei Erreichen der Montagestellung jede Pendelbewegung zu unterdrücken.

Nach Anspruch 13 ist es bevorzugt, dass die Hängestütze um die Urrilenkrolenachse des Kranes pendelnd gelagert ist. Insbesondere in Verbindung mit dem Merkmalen des Anspruches 14 kann die Hängestütze dann das Zugseil und den Kranhaken symmetrisch umgeben und der Kranhaken kann zum Beispiel in die Hängestütze einfahren und ausfahren. Es ist auf diese Weise besonders einfach möglich, die Drehmomentstützmittel mit der Abstützeinrichtung in Eingrif zu Eine Verstellbarkeit des Stützarms kann einerseits beim Einführen der Drehmomentstützmittel in die Abstützeinrichtung hilfreich sein. Andererseits kann die Verstellbarkeit bei der exakten Positionierung des Rotorblattes zur Rotornabe eingesetzt werden. Bevorzugt erfolgt diese Verstellung mittels eines Verstellantriebes und weiter bevorzugt ferngesteuert.

Bevorzugt wird das Rotorblatt in horizontaler Ausrichtung gehandhabt, d.h. die von der Blattwurzel zur Blattspitze verlaufende Rotorblattlängsachse steht im Wesentlichen horizontal. Gegenüber einer z.B. vertikalen Ausrichtung ergeben sich Vorzüge bei der Befestigung und bei der Handhabung gegenüber der grundsätzlich auch möglichen vertikalen oder schrägstehenden Ausrichtung.

Das Montageverfahren nach Anspruch 18 hat den Vorzug, dass das Rotorblatt zunächst nur auf eine geringe Höhe und bis unterhalb der Nabenhöhe anzuheben ist, wo in der Regel die Windverhältnisse weniger kritisch sind als in Nabenhöhe. In dieser geringeren Höhe ist das Ineingriffbringen von Rotorblatt und Abstützeinrichtung einfacher möglich. Das Ineingriffbringen kann bei Bedarf durch vom Bedienpersonal geführte Steuerseile unterstützt werden. Erst wenn dieses Ineingriffbringen erfolgt ist, wird der Kran so ausgefahren, dass das Rotorblatt in Montagehöhe gelangt. Die in Montagehöhe herrschenden stärkeren Winde sind dann aber weniger kritisch, weil das Rotorblatt drehgesichert gehalten ist.

Die zu den vorangegangenen Ansprüchen diskutierten Verstellantriebe der Handhabungsvorrichtung lassen sich vorteilhafterweise bei der Ausrichtung des Rotorblattes zur Rotornabe einsetzen.

Nachfolgend soll die Erfindung anhand von Ausführungsbeispielen weiter erläutert werden, die in den Figuren schematisch und prinzipienhaft dargestellt sind. Gleiche Bezugszeichen stehen dabei für gleiche oder gleichartige Teile. Es zeigen:
- Fig. 1: eine schematische Darstellung einer Windenergieanlage;
- Fig. 2: eine perspektivische Darstellung eines Kranauslegers mit angeschlagenem Kranhaken und daran angeschlagener Lasttraverse sowie mit einem ersten Ausführungsbeispiel einer Abstützeinrichtung;
- Fig. 3: eine perspektivische Darstellung der Lasttraverse der Fig. 2;
- Fig. 4.: eine perspektivische Darstellung gemäß Fig. 2 mit einem zweiten Ausführungsbeispiel einer Abstützeinrichtung; und
- Fig. 5: eine perspektivische Ansicht der Abstützeinrichtung der Figur 4 in Alleinstellung mit weggelassener Frontplatte.

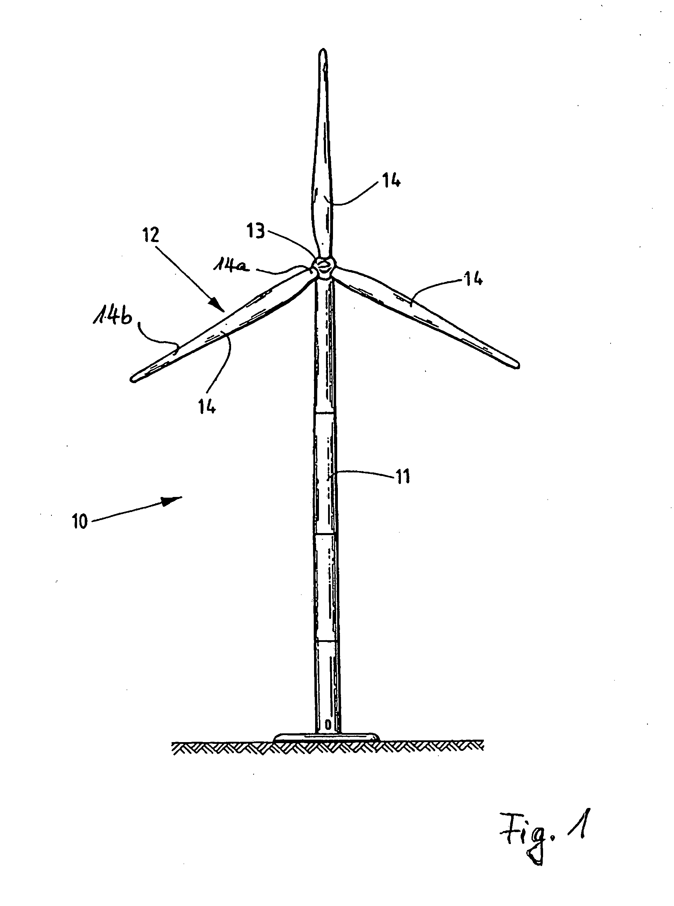

Fig. 1 zeigt eine schematische Darstellung einer Windenergieanlage 10, die einen Turm 11 und einen Rotor 12 mit drei Rotorblättern 14 aufweist, die an einer Rotornabe 13 angebracht sind. Der Turm 11 ist im gezeigten Beispiel als Stahlrohrturm ausgebildet und besteht aus mehreren, miteinander verbundenen Rohrturmabschnitten. Es sind auch Gittertürme oder aus Beton hergestellte Türme bekannt, sowie Mischformen daraus, sogenannte Hybridtürme.

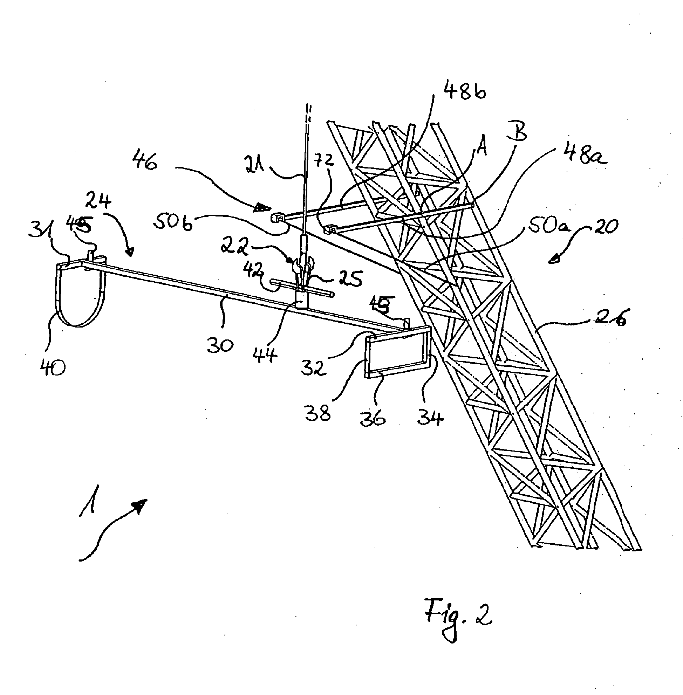

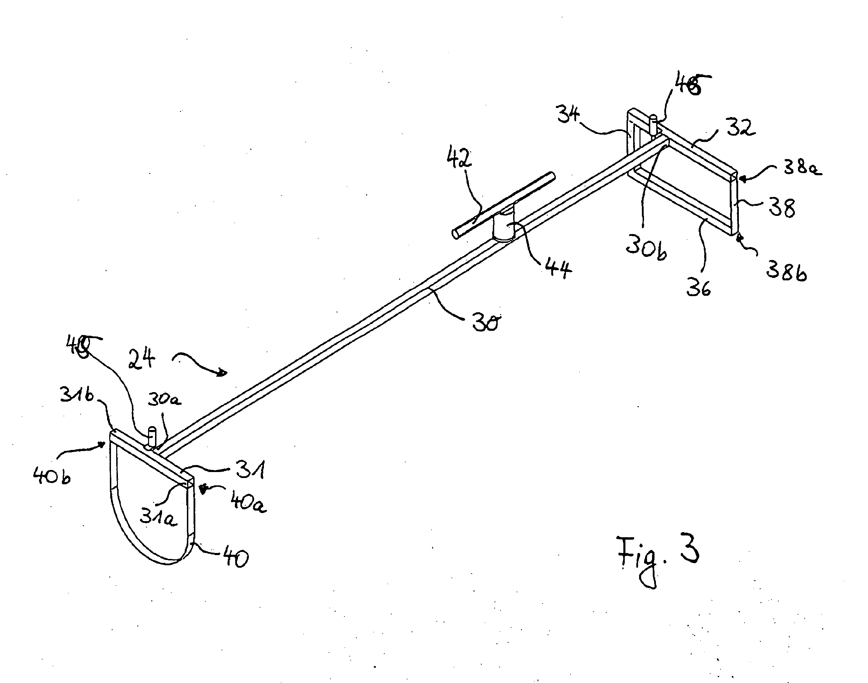

Zur Montage der Rotorblätter 14 an der Nabe 13 werden Krane unterschiedlicher Bauformen eingesetzt. Ohne Beschränkung der Allgemeinheit zeigt Fig. 2 einen Kranausschnitt, nämlich einen Ausleger 26 eines Gittermastkranes 20, der im Übrigen wie im Stand der Technik bekannt ausgeführt sein kann. Vom nicht dargestellten oberen Ende dieses Auslegers 26 hängt der am Kranseil 21 angeschlagene Krandoppelhaken 22 herab. Eine Lasttraverse 24 ist mittels eines Drahtseiles 25 am Krandoppelhaken 22 angeschlagen. Die Lasttraverse 24 ist zur Aufnahme eines in Fig. 2 nicht dargestellten Rotorblattes 14 ausgebildet und vergrößert in Alleinstellung in Figur 3 gezeigt.

Die in Fig. 3 gezeigte Lasttraverse 24 besteht aus einem Längsträger 30, an dessen beiden Enden 30a, 30b ein blattwurzelseitiger Querträger 31 und ein blattspitzenseitiger Querträger 32 ausgebildet ist. Bei Aufnahme eines Rotorblattes 14 in der Lasttraverse 24 ist der aus Längsträger 30 und den beiden Querträgern 31 und 32 gebildete Tragerahmen oberhalb des Rotorblatts 14 angeordnet.

An den beiden freien Enden 31 a, 31 b des blattwurzelseitigen Querträgers 31 sind die Gurtenden 40a, 40b eines Tragegurtes 40 befestigt, der halbkreisförmig zwischen den freien Enden 31 a, 31 b des Querträgers 31 und unterhalb des Querträgers 31 verläuft. Dieser Tragegurt 40 dient der Aufnahme der Blattwurzel 14a eines Rotorblattes 14 und kann z.B. an einem seiner Enden 40a, 40b ferngesteuert vom blattwurzelseitigen Querträger 31 zur Freigabe des Rotorblattes 14 gelöst werden. Der blattspitzenseitige Querträger 32 bildet zusammen mit einem hinteren Vertikalträger 34, der senkrecht am Querträger 32 befestigt ist, und einem parallel zum Querträger 32 verlaufenden Horizontalträger 36, der am unteren Ende des Vertikalträgers 34 befestigt ist, ein liegendes U-Profil, dessen offene Seite von einem Schließgurt 38 verschlossen werden kann, der sich vom vorderen Ende des Querträgers 32 zum vorderen Ende des Horizontalträgers 36 erstreckt, und zumindest an einem Gurtende 38a, 38b lösbar befestigt ist, z.B. ferngesteuert lösbar, zur Freigabe des Rotorblattes 14. Das liegende U-Profil dient der Aufnahme eines blattspitzenseitigen Bereiches 14b eines Rotorblattes 14. Über zwei an den beiden Endbereichen 30a, 30b des Längsträgers 30 angeordnete Anpressmittel 45 kann das Rotorblatt 14 nach unten gegen den blattwurzelseitigen Tragegurt 40 bzw. gegen den blattspitzenseitigen Horizontalträger 36 gedrückt und dadurch fixiert werden. Auch diese Anpressmittel 45 sind bevorzugt ferngesteuert ausgebildet.

Auf der Oberseite des Längsträgers 30 der Lasttraverse 24 ist drehbar eine Kulissenstange 42 angebracht, indem zwischen dieser Kulissenstange 42 und dem Längsträger 30 ein Drehlager 44 mit Drehantrieb angeordnet ist, wobei der Drehantrieb bevorzugt ferngesteuert ausgebildet ist. Im gezeigten Beispiel verläuft die Kulissenstange 42 parallel zum Längsträger 30. Angetrieben vom Drehantrieb kann z.B. bei festgehaltener Kulissenstange 42 der Längsträger 30, ggf. mit einem davon getragenen Rotorblatt 14, gegenüber der Kulissenstange 42 gedreht werden.

In Figur 2 ist die zur Kulissenstange 42 korrespondierende Kulisse 46 dargestellt, die mit zwei länglichen Kulissenträgern 48a, 48b seitlich am Ausleger 20 befestigt ist. Zur Stabilisierung dieser den Ausleger kranhakenseitig überragenden Kulissenträger 48a, 48b erstreckt sich von deren freien Endbereichen zum Ausleger 20 unterhalb der Kulissenträger 48a, 48b hin jeweils eine Abstützstrebe 50a, 50b. An den freien Enden sind die Kulissenträger 48a, 48b als nach unten offenes U-Profil ausgeformt, dessen Form im Wesentlichen komplementär zur Kulissenstange 42 ausgeführt ist.

Die Länge der Kulissenträger 48a, 48b ist so gewählt, dass die U-Profile beide auf Höhe des Kranseiles 21 enden, so dass die Kulisse 46 in der vertikalen Bewegungsbahn des Kranhakens 22 steht. Bei Anheben der Lasttraverse 24 und bei entsprechenden Orientierung der Kulissenstange 42 zur Kulisse 46 kann die Kulissenstange 24 in das nach unten offene U-Profil einlaufen und ist dann gegen Drehung um eine vertikale Achse gesichert gehalten.

Im gezeigten Ausführungsbeispiel sind die beiden Kulissenträger 48a, 48b z.B. an den Befestigungspunkten A und B fest mit dem Ausleger 26 verbunden. Die Kulissenträger 48a, 48b können auch in der Neigung verstellbar ausgebildet werden, z.B. indem entweder Befestigungspunkt A oder Befestigungspunkt B um eine horizontale Achse drehbar befestigt ist, während der andere Befestigungspunkt in vertikaler Richtung beweglich ist, z.B. innerhalb einer Führung. Die Bewegung kann z.B. ein nicht gezeigter Hydraulikzylinder ausführen, der an seinem einen Ende am Ausleger 26 und am anderen Ende am Befestigungspunkt A respektive B des Kulissenträgers 48a, 48b abgestützt ist. Weiterhin können in nicht gezeigter Weise die Kulissenträger 48a, 48b in ihrer Länge verstellbar ausgebildet sein, indem z.B. in Längserstreckung der Kulissenträger 48a, 48b mehrerer Befestigungsbohrungen vorgesehen sind, durch die Verbindungsbolzen gesteckt werden können und die Verbindung zum Ausleger 26 hergestellt wird. Die Kulissenträger 48a, 48b können auch als hydraulische Zylinder ausgeführt sein. Die Abstützstreben 50a und 50b wären dann entsprechend beweglich ausgeführt.

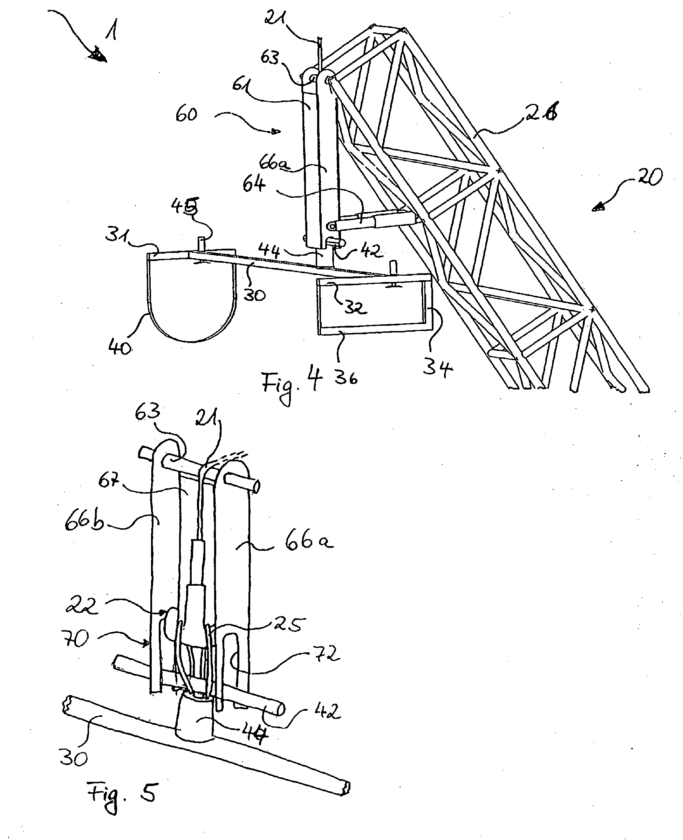

Fig. 4. zeigt eine perspektivische Darstellung gemäß Fig. 2 einer zweiten Ausführungsform einer Abstützeinrichtung 60, die in Fig. 5 noch einmal vergrößert und in Alleinstellung mit weggelassener Frontplatte 61 gezeigt ist, so dass weitere Details erkennbar werden. Die Abstützeinrichtung 60 ist an ihrem oberen Ende um die Umlenkrolle 63 drehbar am Ausleger 26 angelenkt, so dass sie um diese Achse pendeln kann. Das freie Ende der Abstützeinrichtung 60 hängt unterhalb und in Abstand zum Ausleger 26. Es ist über im Wesentlichen waagerecht verlaufende Stützhydraulikzylinder 64 gegen den Ausleger 26 abgestützt. Die Hydraulikzylinder 64 können beispielsweise ferngesteuert in der Länge veränderbar sein.

Die Abstützeinrichtung 60, die auch als Hängestütze bezeichnet werden kann, ist im Wesentlichen als quaderförmiger Hohlkörper ausgeführt mit zwei Seitenplatten 66a, 66b und einer Front- 61 und einer Rückplatte 67. Der Hohlkörper ist im dargestellten Beispiel nach oben und unten offen, so dass das Hubseil 21 den Hohlkörper auf seiner vertikalen Bewegungsbahn durchlaufen kann, und er ist symmetrisch um diese vertikale Bewegungsbahn des Hubseiles 21 angeordnet. Die Größe des Hohlkörpers ist zur Größe des Krandoppelhakens 22 so gewählt, dass der Kranhaken 22 in das Hohlkörperinnere eingefahren werden kann.

In den freien Endseiten der Seitenplatten 66a, 66b sind nach unten offene Langlöcher 70 mit Abstützflächen 72 komplementär zur Form der Kulissenstange 42 ausgebildet. Die Langlöcher 70 der Fig. 5 haben gegenüber den Langlöchern 70 der Fig. 4 eine größere vertikale Erstreckung, so dass die Kulissenstange 42 über eine größere Vertikalstrecke in den Langlöchern 70 geführt nach oben bewegt werden kann.

Zur Montage eines Rotorblattes 14 an eine Nabe 13 wird zunächst der Tragerahmen 30, 31, 32 der Lasttraverse 24 so auf das Rotorblatt 14 aufgesetzt, dass der Rotorblattschwerpunkt möglichst unterhalb des Drehlagers 44 liegt und der blattwurzelseitige Querträger 31 oberhalb des Blattwurzel 14a steht. Das seitlich offene blattspitzenseitige U-Profil 32, 34, 36 wird seitlich über einen Blattspitzenbereich 14b geführt und der Schließgurt 38 geschlossen. Der Tragegurt 40 wird um die Blattwurzel 14a gelegt und ebenfalls geschlossen. Anschließend können zur Fixierung des Rotorblattes 14 die Anpressmittel 45 betätigt werden. Dieser Lastaufnahmevorgang wird z.B. ausgeführt, während die Lasttraverse 24 bereits am Kranhaken 22 eines Krans angeschlagen ist.

Nachdem das zu montierende Rotorblatt 14 an die Lasttraverse 24 angeschlagen wurde hebt der Kran 20 nunmehr Lasttraverse 24 und Rotorblatt 14 in vertikaler Richtung an. In die vertikale Bewegungsbahn der Lasttraverse 24 greift die Abstützeinrichtung 46, 60 ein, so dass bei Erreichen der Höhe dieser Abstützeinrichtung 46, 60 die Lasttraverse 24 und hier namentlich die Kulissenstange 42 in Eingriff mit der Kulisse 46, 70 gelangt. Danach erfolgt die Feinausrichtung des Rotorblattes 14 zur Rotornabe 13 , anschließend die Montage des Rotorblattes 14 und schließlich die Freigabe des Rotorblattes 14 durch Abschlagen von der Lasttraverse 24.

Die in den Figuren dargestellte Lasttraverse 24 dient lediglich als Beispiel. Es sind im Stand der Technik viele alternative Ausbildungen solcher Lastaufnahmemittel bekannt, z.B. aus der WO 2010/124744 A1, aus der WO 03/104645 A1, aus der DE 20 2010 003 033 U1, aus der EP 1 925 583 A1 und schließlich aus der DE 10 2009 005 632 A1.

## Patentansprüche

1. Lasthandhabungsvorrichtung (1) zum Anheben von Rotorblättern (14) in eine Montageposition, mit einem Kran (20) mit Kranausleger (26), einem Kranhaken (22) und mit Befestigungsmitteln (25, 24) zum lösbaren Befestigen eines Rotorblattes (14) am Kranhaken (22), **dadurch gekennzeichnet, dass** in einem oberen Bereich des Kranauslegers (26) eine Abstützeinrichtung (46, 48a, 48b, 50a, 50b; 60, 64) befestigt ist, die eine Abstützfläche (72) aufweist, die in die vertikale Bewegungsebene des Rotorblattes (14) so hineinragt, dass das Rotorblatt (14) oder die Befestigungsmittel (25, 24) beim Anheben dagegen zur Anlage kommen, wobei die Abstützeinrichtung (46, 48a, 48b, 50a, 50b; 60, 64) starr ausgebildet ist, wobei die Abstützfläche (72) derart geformt ist, dass das Rotorblatt (14) gegen Drehung um eine vertikale Achse gesichert ist.

2. Lasthandhabungsvorrichtung (1) nach Anspruch 1, wobei die Befestigungsmittel ein Lastaufnahmemittel (24) mit einem Tragerahmen (30, 31, 32, 42, 44) umfassen, wobei an dem Tragerahmen (30, 31, 32, 42, 44) das Rotorblatt (14) befestigbar ist, und wobei der Kranhaken (22) am Tragerahmen (30, 31, 32) befestigbar ist, **dadurch gekennzeichnet, dass** die Abstützfläche (72) und der Tragerahmen (30, 31, 32, 42, 44) derart angeordnet und ausgebildet sind, dass ein Bereich des Tragerahmens (30, 31, 32, 42, 44) beim Anheben gegen die Abstützfläche (72) der Abstützeinrichtung (46, 48a, 48b, 50a, 50b; 60, 64) zur Anlage kommt.

3. Lasthandhabungsvorrichtung (1) nach Anspruch 1 oder 2, **dadurch gekennzeichnet, dass** entweder an dem Tragerahmen (30, 31, 32, 42, 44) ein Drehmomentstützmittel (42) und in der Abstützeinrichtung (46, 48a, 48b, 50a, 50b; 60, 64) eine Aufnahmeöffnung (46, 70) ausgebildet ist, die die Abstützfläche (72) bildet, oder in dem Tragerahmen (30, 31, 32, 42, 44) eine Aufnahmeöffnung (46, 70) und an der Abstützeinrichtung (46, 48a, 48b, 50a, 50b; 60, 64) ein Drehmomentstützmittel (42) ausgebildet ist, die die Abstützfläche (72) bildet, wobei das Drehmomentstützmittel (42) und die Aufnahmeöffnung (46, 70) derart angeordnet und komplementär zueinander ausgebildet sind, dass das Drehmomentstützmittel (42) vor oder bei Erreichen der Montageposition des Rotorblattes (14) durch dessen vertikales Anheben in die Aufnahmeöffnung (46, 70) eingreift und dadurch von der Abstützeinrichtung (46, 48a, 48b, 50a, 50b; 60, 64) gegen Drehung um eine vertikale Achse gesichert gehalten ist.

4. Lasthandhabungsvorrichtung (1) nach Anspruch 3, **dadurch gekennzeichnet, dass** die Aufnahmeöffnung (46, 70) als nach unten offenes Langloch (70) ausgebildet und in vertikaler Richtung so dimensioniert ist, dass das Drehmomentstützmittel (42) über eine Wegstrecke in der Aufnahmeöffnung (70) in vertikaler Richtung bei einem weiteren Anheben des Rotorblattes (14) bewegbar ist.

5. Lasthandhabungsvorrichtung (1) nach einem der vorhergehenden Ansprüche, **dadurch gekennzeichnet, dass** der Tragerahmen (30, 31, 32) ein Drehlager (44) aufweist, mittels dem das Drehmomentstützmittel (42) drehbar am Tragerahmen (30, 31, 32) gelagert ist, wobei dieses Drehlager (44) Arretiermittel zur Arretierung des Drehlagers (44) aufweist und mit einem Drehantrieb ausgebildet ist.

6. Lasthandhabungsvorrichtung (1) nach Anspruch 5, **dadurch gekennzeichnet, dass** der Drehantrieb und/oder die Arretiermittel fernsteuerbar ausgebildet sind/ist.

7. Lasthandhabungsvorrichtung (1) nach einem der Ansprüche 3 bis 6, **dadurch gekennzeichnet, dass** die Abstützeinrichtung (46, 48a, 48b, 50a, 50b) ein am Kranausleger (26) angebrachter Abstützträger (48a, 48b) ist, der an seinem einen Ende am Kranausleger (26) befestigt ist, und der kranhakenseitig den Kranauslegers überragt, wobei der Abstützträger (48a, 48b) in seinem freien, in die vertikale Bewegungsebene des Rotorblattes (14) hineinragenden Ende die Aufnahmeöffnung (46) aufweist.

8. Lasthandhabungsvorrichtung (1) nach Anspruch 7, **dadurch, gekennzeichnet, dass** die Abstützeinrichtung (46, 48a, 48b, 50a, 50b) aus beidseitig auf den Seitenflächen des Kranauslegers (26) angebrachten Abstützträgern (48a, 48b) besteht.

9. Lasthandhabungsvorrichtung (1) nach Anspruch 7 oder 8, **dadurch gekennzeichnet, dass** die Abstützträger (48a, 48b) in der Neigung verstellbar am Kranausleger (26) befestigt sind, wobei die Verstellung insbesondere mittels Verstellantrieben und insbesondere fernsteuerbar ausführbar ist.

10. Lasthandhabungsvorrichtung (1) nach Anspruch 7, 8 oder 9 **dadurch gekennzeichnet, dass** die Abstützträger (48a, 48b) in ihrer Länge einstellbar ausgebildet sind.

11. Lasthandhabungsvorrichtung (1) nach einem der Ansprüche 3 bis 6, **dadurch gekennzeichnet, dass** die Abstützeinrichtung (60, 64) als Hängestütze (60) ausgeführt ist, die an ihrem oberen Ende am Kranausleger (26) von diesem kranhakenseitig herabhängend befestigt ist, und die an ihrem unteren freien Ende die Aufnahmeöffnung (70) aufweist.

12. Lasthandhabungsvorrichtung (1) nach Anspruch 11, **dadurch gekennzeichnet, dass** die Hängestütze (60) um eine Pendelachse (63) pendelnd ausgeführt ist, wobei die Hängestütze (60) bevorzugt einen Aktuator zur Arretierung der Pendelachse (63) aufweist.

13. Lasthandhabungsvorrichtung (1) nach Anspruch 12, **dadurch gekennzeichnet, dass** die Hängestütze (60) um die Achse (63) der Umlenkrolle des Kranes (20) für das Zugseil (21) des Kranhakens (22) drehbar gelagert ist.

14. Lasthandhabungsvorrichtung (1) nach Anspruch 13, **dadurch gekennzeichnet, dass** die Hängestütze (60) als nach unten und oben offener Hohlkörper und so dimensioniert ausgebildet ist, dass der Kranhaken (22) in der Hängestütze (60) aufnehmbar und durch sie hindurchführbar ist

15. Lasthandhabungsvorrichtung (1) nach einem der Ansprüche 11 bis 14, **dadurch gekennzeichnet, dass** das freie Ende der Hängestütze (60) gegen den Kranausleger (26) mit mindestens einem Stützarm (64) abgestützt ist, wobei insbesondere der Stützarm (64) in seiner Länge verstellbar ausgebildet ist, wobei die Verstellung insbesondere mittels Verstellantrieben und insbesondere ferngesteuert ausführbar ist.

16. Lasthandhabungsvorrichtung (1) nach einem der vorhergehenden Ansprüche, **dadurch gekennzeichnet, dass** das Rotorblatt (14) in der Lasthandhabungsvorrichtung (1) im Wesentlichen horizontal ausgerichtet ist.

17. Verfahren zur Montage von Rotorblättern (14) an der Rotornabe (13) einer Windenergieanlage (10), wobei die Rotornabe (13) auf dem Turm (11) der Windenergieanlage (10) angeordnet ist, mit den folgenden Verfahrensschritten:
Aufbau der Lasthandhabungsvorrichtung (1) nach einem der vorhergehenden Ansprüche;
Befestigen des Rotorblattes (14) an der Lasthandhabungsvorrichtung (1);
Anheben des Rotorblattes (14) bis das Rotorblatt (14) oder die Befestigungsmittel (25, 24) gegen die Abstützeinrichtung (46, 48a, 48b, 50a, 50b; 60, 64) zur Anlage kommen;
Ausrichten des Rotorblattes (14) zur Nabe (13);
Befestigen des Rotorblattes (14) an der Nabe (13);
Lösen des Rotorblattes (14) von der Lasthandhabungsvorrichtung (1).

18. Verfahren nach Anspruch 17, wobei der Kran (20) einen teleskopierbaren Ausleger (26) aufweist, **dadurch gekennzeichnet, dass** zunächst das Anheben des Rotorblattes (14) bis zur Anlage an die Abstützeinrichtung (46, 48a, 48b, 50a, 50b; 60, 64) bei eingefahrenem oder nur teilweise ausgefahrenem Ausleger (26) des Krans (20) unterhalb der Nabenhöhe erfolgt, wobei erst nach Erreichen der Anlageposition das Rotorblatt (14) durch Ausfahren des Auslegers (26) in die Montagehöhe angehoben wird.

19. Verfahren nach Anspruch 17 oder 18, **dadurch gekennzeichnet, dass** für das Ausrichten des Rotorblattes (14) die Verstellantriebe der Handhabungsvorrichtung (1) nach den Ansprüchen 5 und/oder 6 und/oder 9 und/oder 15 betätigt werden.

## Claims

1. A load handling apparatus (1) for lifting rotor blades (14) to a mounting position, comprising a crane (20) with a crane boom (26), a load hook (22) and mounting means (25, 24) for mounting a rotor blade (14) to the load hook (22) in a detachable manner,
**characterised in that**
a supporting device (46, 48a, 48b, 50a, 50b; 60, 64) is mounted in an upper region of the crane boom (26), said supporting device (46, 48a, 48b, 50a, 50b; 60, 64) incorporating a supporting surface (72), which extends into the vertical movement plane of the rotor blade (14) in such a way that the rotor blade (14) or the mounting means (25, 24) come to rest against said supporting surface (72) during lifting, wherein the supporting device (46, 48a, 48b, 50a, 50b; 60, 64) is designed rigid, wherein the supporting surface (72) is formed in such a way that the rotor blade (14) is prevented from rotating on a vertical axis.

2. The load handling apparatus (1) according to Claim 1, wherein the mounting means comprise a load handling device (24) having a supporting frame (30, 31, 32, 42, 44), wherein the rotor blade (14) can be mounted to the supporting frame (30, 31, 32, 42, 44), and wherein the load hook (22) can be mounted to the supporting frame (30, 31, 32),
**characterised in that**
the supporting surface (72) and the supporting frame (30, 31, 32, 42, 44) are arranged and designed in such a way that a region of the supporting frame (30, 31, 32, 42, 44) comes to rest against the supporting surface (72) of the supporting device (46, 48a, 48b, 50a, 50b; 60, 64) during lifting.

3. The load handling apparatus (1) according to Claim 1 or 2,
**characterised in that**
either a torque reaction bar (42) is formed on the supporting frame (30, 31, 32, 42, 44) and a receiving opening (46, 70) is formed in the supporting device (46, 48a, 48b, 50a, 50b; 60, 64), said receiving opening (46, 70) forming the supporting surface (72), or a receiving opening (46, 70) is formed in the supporting frame (30, 31, 32, 42, 44) and a torque reaction bar (42) is formed on the supporting device (46, 48a, 48b, 50a, 50b; 60, 64), said receiving opening (46, 70) forming the supporting frame (72), wherein the torque reaction bar (42) and the receiving opening (46, 70) are arranged and formed complementary in relation to each other in such a way that the torque reaction bar (42) engages the receiving opening (46, 70) before or when the rotor blade (14) has reached its mounting position by being lifted in vertical direction and said torque reaction bar (42) is thereby held by the supporting device (46, 48a, 48b, 50a, 50b; 60, 64) such that it is prevented from rotating on a vertical axis.

4. The load handling apparatus (1) according to Claim 3,
**characterised in that**
the receiving opening (46, 70) is designed as an elongated hole (70) that is open at the bottom and said receiving opening (46, 70) is dimensioned in vertical direction in such a way that the torque reaction bar (42) is movable in vertical direction in the receiving opening (70) for a certain distance when the rotor blade (14) is lifted further.

5. The load handling apparatus (1) according to any one of the preceding claims, **characterised in that**
the supporting frame (30, 31, 32) incorporates a pivot bearing (44) by means of which the torque reaction bar (42) is pivot-mounted to the supporting frame (30, 31, 32), wherein this pivot bearing (44) incorporates locking means for locking the pivot bearing (44) and is designed to have a rotary drive.

6. The load handling apparatus (1) according to Claim 5,
**characterised in that**
the rotary drive and/or the locking means are/is designed such that they can be remote controlled.

7. The load handling apparatus (1) according to any one of Claims 3 to 6,
**characterised in that**
the supporting device (46, 48a, 48b, 50a, 50b) is a supporting beam (48a, 48b) attached to the crane boom (26), said supporting beam (48a, 48b) being mounted to the crane boom (26) at one of its ends and projecting beyond the crane boom on the side of the load hook, wherein the supporting beam (48a, 48b) incorporates the receiving opening (46) in its free end that extends into the vertical movement plane of the rotor blade (14).

8. The load handling apparatus (1) according to Claim 7,
**characterised in that**
the supporting device (46, 48a, 48b, 50a, 50b) consists of supporting beams (48a, 48b) that are mounted to the side surfaces of the crane boom (26) on either side.

9. The load handling apparatus (1) according to Claim 7 or 8,
**characterised in that**
the supporting beams (48a, 48b) are mounted to the crane boom (26) such that they can be adjusted in their inclination, wherein the adjustment is designed such that it can, in particular, be made by means of adjustment drives and can, in particular, be remote controlled.

10. The load handling apparatus (1) according to Claim 7, 8 or 9,
**characterised in that**
the supporting beams (48a, 48b) are designed such that they can be adjusted in their length.

11. The load handling apparatus (1) according to any one of Claims 3 to 6,
**characterised in that**
the supporting device (60, 64) is designed as a hanging support (60) which is mounted to the crane boom (26) at its upper end such that it is hanging down from said crane boom (26) on the side of the load hook and which incorporates the receiving opening (70) at its lower free end.

12. The load handling apparatus (1) according to Claim 11,
**characterised in that**
the hanging support (60) is designed such that it swings on a swing axle (63), wherein the hanging support (60), preferably, incorporates an actuator for locking the swing axle (63).

13. The load handling apparatus (1) according to Claim 12,
**characterised in that**
the hanging support (60) is mounted such that it can be pivoted on the axle (63) of the pulley of the crane (20) for the hoisting rope (21) of the load hook (22).

14. The load handling apparatus (1) according to Claim 13,
**characterised in that**
the hanging support (60) is designed as a hollow body that is open at its bottom and top and said hanging support (60) is dimensioned in such a way that the load hook (22) can be received in and passed through the hanging support (60).

15. The load handling apparatus (1) according to any one of Claims 11 to 14,
**characterised in that**
the free end of the hanging support (60) is supported against the crane boom (26) with at least one support arm (64) wherein, in particular, the support arm (64) is designed such that it can be adjusted in its length, wherein the adjustment is designed such that it can, in particular, be made by means of adjustment drives and can, in particular, be remote controlled.

16. The load handling apparatus (1) according to any one of the preceding claims,
**characterised in that**
the rotor blade (14) is, in essence, aligned horizontally in the load handling apparatus (1).

17. A method for mounting rotor blades (14) to the rotor hub (13) of a wind turbine (10), wherein the rotor hub (13) is arranged on the tower (11) of the wind turbine (10), comprising the following method steps:
setting up the load handling apparatus (1) according to any one of the preceding claims;
mounting the rotor blade (14) to the load handling apparatus (1);
lifting the rotor blade (14) until the rotor blade (14) or the mounting means (25, 24) come to rest against the supporting device (46, 48a, 48b, 50a, 50b; 60, 64);
aligning the rotor blade (14) in relation to the hub (13);
mounting the rotor blade (14) to the hub (13);
detaching the rotor blade (14) from the load handling apparatus (1).

18. The method according to Claim 17, wherein the crane (20) incorporates a telescoping boom (26),
**characterised in that**,
initially, the rotor blade (14) is lifted until it comes to rest against the supporting device (46, 48a, 48b, 50a, 50b; 60, 64) with the boom (26) of the crane (20) being retracted or only partially extended below the height of the hub, wherein the rotor blade (14) is lifted up to the mounting height by extending the boom (26) only after the resting position has been reached.

19. The method according to Claim 17 or 18,
**characterised in that**
the adjustment drives of the load handling apparatus (1) according to Claims 5 and/or 6 and/or 9 and/or 15 are actuated in order to align the rotor blade (14).

## Revendications

1. Dispositif de manutention de charges (1) pour le levage de pales de rotor (14) jusqu'en position de montage, avec une grue (20) dotée d'une flèche (26), d'un crochet (22) et de moyens de fixation (25, 24) pour la fixation amovible d'une pale de rotor (14) au crochet de la grue (22), **caractérisé en ce que** dans une partie supérieure de la flèche de la grue (26) est fixé un dispositif d'appui (46, 48a, 48b, 50a, 50b; 60, 64) lequel présente une face d'appui (72) qui pénètre dans le plan de mouvement vertical de la pale de rotor (14) de façon telle que, lors du levage, la pale de rotor (14) ou les moyens de fixation (25, 24) prennent appui contre ladite face d'appui, le dispositif d'appui (46, 48a, 48b, 50a, 50b; 60, 64) étant de configuration rigide et la face d'appui (72) ayant une forme telle qu'elle empêche une rotation de la pale de rotor (14) autour d'un axe vertical.

2. Dispositif de manutention de charges (1) selon la revendication 1, les moyens de fixation comprenant un moyen de suspension de charge (24) avec un cadre porteur (30, 31, 32, 42, 44), la pale de rotor pouvant être fixée au cadre porteur (30, 31, 32, 42, 44) et le crochet (22) de la grue pouvant être fixé au cadre porteur (30, 31, 32), **caractérisé en ce que** la face d'appui (72) et le cadre porteur (30, 31, 32, 42, 44) sont agencés et conçus de façon telle que, lors du levage, une partie du cadre porteur (30, 31, 32, 42, 44) vienne s'appuyer contre la face d'appui (72) du dispositif d'appui (46, 48a, 48b, 50a, 50b; 60, 64).

3. Dispositif de manutention de charges (1) selon la revendication 1 ou 2, **caractérisé en ce qu'**est prévu soit un élément anti-couple (42) fixé au cadre porteur (30, 31, 32, 42, 44) et un logement (46, 70) réservé dans le dispositif d'appui (46, 48a, 48b, 50a, 50b; 60, 64) et formant la face d'appui (72), soit un logement (46, 70) dans le cadre porteur (30, 31, 32, 42, 44) et un élément anti-couple (42) fixé au dispositif d'appui (46, 48a, 48b, 50a, 50b; 60, 64) et formant la face d'appui (72), l'élément anti-couple (42) et le logement (46, 70) étant d'un agencement et d'une conformation complémentaire tels que, avant ou au moment de l'atteinte de la position de montage de la pale de rotor (14) et du fait du levage vertical de celle-ci, l'élément anti-couple (42) se loge dans le logement (46, 70) et, de ce fait, est maintenu par le dispositif d'appui (46, 48a, 48b, 50a, 50b; 60, 64) de façon à empêcher une rotation autour d'un axe vertical.

4. Dispositif de manutention de charges (1) selon la revendication 3, **caractérisé en ce que** le logement (46, 70) est réalisé sous forme de trou oblong ouvert (70) et dimensionné dans le sens vertical de façon telle que l'élément anti-couple (42) est, sur une certaine distance, mobile dans le sens vertical dans le logement (70) lorsqu'on poursuit le levage de la pale de rotor (14).

5. Dispositif de manutention de charges (1) selon l'une des revendications précédentes, **caractérisé en ce que** le cadre porteur (30, 31, 32) présente un palier de pivotement (44) au moyen duquel l'élément anti-couple (42) est logé sur le cadre porteur (30, 31, 32) de façon à pouvoir pivoter, ce palier de pivotement (44) présentant des moyens d'arrêt pour bloquer le palier de pivotement (44) et étant muni d'un mécanisme de rotation.

6. Dispositif de manutention de charges (1) selon la revendication 5, **caractérisé en ce que** le mécanisme de rotation et/ou les moyens d'arrêt sont réalisés de façon à pouvoir être commandés à distance.

7. Dispositif de manutention de charges (1) selon l'une des revendications 3 à 6, **caractérisé en ce que** le dispositif d'appui (46, 48a, 48b, 50a, 50b) est un support (48a, 48b) fixé à l'une de ses extrémités à une flèche de grue (26) et faisant saillie par rapport à la flèche du côté du crochet de la grue, ce support (48a, 48b) présentant à son extrémité libre pénétrant dans le plan de mouvement vertical de la pale de rotor (14) le logement (46).

8. Dispositif de manutention de charges (1) selon la revendication 7, **caractérisé en ce que** le dispositif d'appui (46, 48a, 48b, 50a, 50b) consiste en des supports (48a, 48b) fixés aux deux faces latérales de la flèche (26) de la grue.

9. Dispositif de manutention de charges (1) selon la revendication 7 ou 8, **caractérisé en ce que** les supports (48a, 48b) sont fixés à la flèche (26) de la grue de façon à pouvoir ajuster leur inclinaison, cet ajustage étant notamment effectué au moyen de mécanismes de commande et en particulier par télécommande.

10. Dispositif de manutention de charges (1) selon la revendication 7, 8 ou 9 **caractérisé en ce que** les supports (48a, 48b) sont conçus de façon à pouvoir en régler la longueur.

11. Dispositif de manutention de charges (1) selon l'une des revendications 3 à 6, **caractérisé en ce que** le dispositif d'appui (60, 64) est réalisé sous forme de support suspendu (60) dont l'extrémité supérieure est fixée à la flèche de grue (26) et en pend du côté du crochet de la grue et qui présente, à son extrémité inférieure, le logement (70).

12. Dispositif de manutention de charges (1) selon la revendication 11, **caractérisé en ce que** le support suspendu (60) est réalisé de façon à pouvoir balancer autour d'un axe d'oscillation (63), le support suspendu (60) présentant de préférence un actuateur pour bloquer l'axe d'oscillation (63).

13. Dispositif de manutention de charges (1) selon la revendication 12, **caractérisé en ce que** le support suspendu (60) est logé de façon à pouvoir pivoter autour de l'axe (63) de la poulie de renvoi du câble de traction (21) du crochet (22) de la grue (20).

14. Dispositif de manutention de charges (1) selon la revendication 13, **caractérisé en ce que** le support suspendu (60) est réalisé sous forme de pièce creuse ouverte vers le haut et vers le bas et dimensionnée de façon telle que le crochet (22) de la grue puisse venir se loger dans le support suspendu (60) et le traverser.

15. Dispositif de manutention de charges (1) selon l'une des revendications 11 à 14, **caractérisé en ce que** l'extrémité libre du support suspendu (60) s'appuie contre la flèche (26) de la grue avec au moins un bras d'entretoise (64), la longueur notamment de ce bras étant ajustable et cet ajustage étant notamment effectué au moyen de mécanismes de commande et en particulier par télécommande.

16. Dispositif de manutention de charges (1) selon l'une des revendications précédentes, **caractérisé en ce que** la pale de rotor (14) placée dans le dispositif de manutention de charges (1) est orientée selon une position essentiellement horizontale.

17. Procédé de montage de pales de rotor (14) sur le moyeu (13) du rotor d'une éolienne (10), le moyeu (13) du rotor étant disposé sur la tour (11) de l'éolienne (10) et le procédé de montage comportant les étapes suivantes:
montage du dispositif de manutention de charges (1) selon l'une des revendications précédentes;
fixation de la pale de rotor (14) au dispositif de manutention de charges (1);
levage de la pale de rotor (14) jusqu'à ce que la pale de rotor (14) ou les moyens de fixation (25, 24) vienne s'appuyer contre le dispositif d'appui (46, 48a, 48b, 50a, 50b; 60, 64);
orientation de la pale de rotor (14) par rapport au moyeu (13);
fixation de la pale de rotor (14) au moyeu (13);
détachement de la pale de rotor (14) du dispositif de manutention de charges (1).

18. Procédé selon la revendication 17, la grue (20) présentant une flèche télescopique (26), **caractérisé en ce que en ce que** l'on procède d'abord au levage de la pale de rotor (14) jusque contre le dispositif d'appui (46, 48a, 48b, 50a, 50b; 60, 64) à une hauteur située en dessous du moyeu, la flèche (26) de la grue (20) n'étant pas ou seulement en partie déployée, la pale de rotor (14) n'étant alors levée jusqu'à la hauteur de montage par déploiement de la flèche (26) qu'après avoir atteint sa position d'appui.

19. Procédé selon la revendication 17 ou 18, **caractérisé en ce que** l'on actionne les mécanismes de commande du dispositif de manutention (1) selon les revendications 5 et/ou 6 et/ou 9 et/ou 15 pour orienter la pale de rotor (14).
